# EUROPÄISCHE PATENTSCHRIFT

(11) **EP 4 202 738 B1**
(45) Veröffentlichungstag und Bekanntmachung des Hinweises auf die Patenterteilung: **26.08.2026**
(21) Anmeldenummer: 21217120.1
(22) Anmeldetag: 22.12.2021
(51) Int. Cl.: G06F 21/32, H04L 9/40

(54) **NUTZERIDENTIFIKATION ANHAND EINER SPRACHEINGABE**
USER IDENTIFICATION USING VOICE INPUT
IDENTIFICATION DE L'UTILISATEUR EN FONCTION D'UNE SAISIE VOCALE

(43) Veröffentlichungstag der Anmeldung: 28.06.2023
(73) Patentinhaber: Deutsche Telekom AG, 53113 Bonn (DE)
(72) Erfinder: JAHN, Carl, 65191 Wiesbaden (DE); EL MALLOUKI, Said, 56329 St.Goar (DE); MINOW, Jascha, 64625 Bensheim (DE)
(74) Vertreter: RDL Patentanwälte PartG mbB

(56) Entgegenhaltungen:
- EP-A2- 1 076 329
- US-A1- 2009 175 424
- US-A1- 2020 395 021
- US-A1- 2021 304 774

## Beschreibung

Die Erfindung betrifft ein Verfahren zum Identifizieren eines Nutzers, bei dem ein von einem Endgerät ausgeführtes Frontend einer verteilten Anwendung eine Eingabe eines Nutzers des Endgeräts erfasst und ein von einem Server ausgeführtes Backend der verteilten Anwendung den Nutzer anhand der erfassten Eingabe identifiziert. Ferner betrifft die Erfindung eine verteilte Anwendung zum Identifizieren eines Nutzers und ein Computerprogrammprodukt.

Verfahren der eingangs genannten Art gehören in unterschiedlichen Ausgestaltungen zum Stand der Technik und dienen dazu, eine Nutzung einer verteilten Anwendung auf identifizierbare Nutzer zu beschränken. Beispielsweise identifiziert die verteilte Anwendung einen Nutzer anhand eines von dem Nutzer eingegebenen Benutzernamens, einer von dem Nutzer eingegebenen E-Mail-Adresse oder einer von dem Nutzer eingegebenen Mitgliedsnummer oder Kundennummer.

Das Identifizieren des Nutzers setzt ein vorheriges Registrieren des Nutzers voraus. Zum Registrieren des Nutzers speichert die verteilte Anwendung den Benutzernamen, die E-Mail-Adresse oder die Mitgliedsnummer oder Kundennummer und identifiziert die verteilte Anwendung den Nutzer nach dem Registrieren anhand des gespeicherten Benutzernamens, der gespeicherten E-Mail-Adresse oder der gespeicherten Mitgliedsnummer oder Kundennummer.

Allerdings muss die verteilte Anwendung zudem verifizieren, ob eine Person, welche den Benutzernamen, die E-Mail-Adresse oder die Mitgliedsnummer oder Kundennummer eingibt, also behauptet, der registrierte Nutzer zu sein, tatsächlich der registrierte Nutzer ist. Zum Verifizieren des Nutzers fordert die verteilte Anwendung den identifizierten Nutzer zu einer weiteren Eingabe auf, welche die Person als den registrierten Nutzer ausweist. Beispielsweise kann die verteilte Anwendung den identifizierten Nutzer anhand eines von dem Nutzer eingegebenen Passworts verifizieren. Die weitere Eingabe kann mittels einer im Besitz des registrierten Nutzers befindlichen elektronischen Vorrichtung, beispielsweise mittels einer von einem digitalen Lesegerät auslesbaren Karte erfolgen.

US 2009/175424 A1 offenbart ein Verfahren zum Ermitteln einer Gruppenzugehörig-keit eines Nutzers. Anhand einer zu einer Spracheingabe des Nutzers korrespondierenden Audiodatei wird ein Alter und/oder ein Geschlecht des Nutzers ermittelt. Wenn eine Gruppe von Nutzern durch das Alter und/oder das Geschlecht definiert ist, kann die Gruppenzugehörigkeit des Nutzers abhängig von dem ermittelten Alter und/oder Geschlecht des Nutzers ermittelt werden.

US 2021/304774 A1 offenbart ein Verfahren zum Identifizieren eines Nutzers mittels eines Nutzerprofils. Das Nutzerprofil umfasst ein Stimmprofil mit einer Mehrzahl von zu Spracheingaben des Nutzers korrespondierenden Audiodateien. Es werden explizite, d.h. bekannten Nutzern zugeordnete, Stimmprofile und anonyme, d.h. unbekannten Nutzern zugeordnete, Stimmprofile unterschieden.

US 2020/395021 A1 offenbart ein Verfahren zum Unterscheiden von Nutzern eines Haushalts. Aus einer zu einer Spracheingabe eines Nutzers des Haushalts korrespondierenden Audiodatei werden demographische Daten wie Alter oder Geschlecht des Nutzers abgeleitet. Die abgeleiteten demographischen Daten und nötigenfalls ein Inhalt der Spracheingabe werden herangezogen, um den Nutzer von weiteren Nutzern des Haushalts zu unterscheiden.

Ein identifizierter und verifizierter Nutzer gilt für die verteilte Anwendung als authentifiziert, d.h. authentisch, und kann die verteilte Anwendung nutzen. Jedoch kann der Nutzer ein Identifizieren, welches nur kombiniert mit einem separaten Verifizieren ein Nutzen der verteilten Anwendung ermöglicht, als unkomfortabel wahrnehmen.

Es ist daher eine Aufgabe der Erfindung ein Verfahren zu Identifizieren eines Nutzers vorzuschlagen, welches einen großen Komfort für den Nutzer bietet. Ein weitere Aufgabe der Erfindung ist, eine verteilte Anwendung zum Identifizieren eines Nutzers und ein Computerprogrammprodukt bereitzustellen.

Ein Gegenstand der Erfindung ist ein Verfahren zum Identifizieren eines Nutzers, bei dem ein von einem Endgerät ausgeführtes Frontend einer verteilten Anwendung eine Eingabe eines Nutzers des Endgeräts erfasst und ein von einem Server ausgeführtes Backend der verteilten Anwendung den Nutzer anhand der erfassten Eingabe identifiziert. Der Nutzer betätigt das Endgerät, insbesondere ein mobiles Endgerät wie ein Smartphone, ein Tablet, ein Notebook oder dergleichen. Das Frontend erfasst die Eingabe des Nutzers mittels des Endgeräts. Das Backend ist über ein Netzwerk, insbesondere über ein Mobilfunknetzwerk, mit dem Frontend verbunden, d.h. das Endgerät und der Server sind jeweils mit dem Netzwerk verbunden.

Erfindungsgemäß erfasst das Frontend auditiv eine Spracheingabe des Nutzers als die Eingabe, erzeugt das Frontend eine zu der erfassten Spracheingabe korrespondierende Audiodatei und überträgt das Frontend die erzeugte Audiodatei zu dem Backend der verteilten Anwendung, empfängt das Backend die übertragene Audiodatei, bestimmt das Backend anhand der empfangenen Audiodatei aus einer Mehrzahl von gespeicherten Audiodateien eine Teilmenge von Audiodateien und identifiziert das Backend den Nutzer anhand der empfangenen Audiodatei, wenn ein Übereinstimmungsgrad der empfangenen Audiodatei mit einer Audiodatei aus der bestimmten Teilmenge gleich einer oder größer als eine bestimmte Akzeptanzschwelle ist. Die Spracheingabe ist für den Nutzer bereits sehr komfortabel. Abgesehen davon ist die Spracheingabe wie ein Fingerabdruck höchst individuell und kaum zu imitieren. Die verteilte Anwendung kann den Nutzer infolgedessen ausschließlich anhand der identifizierenden Eingabe authentifizieren. Mit anderen Worten ist zum Authentifizieren des Nutzers keine weitere Eingabe des Nutzers erforderlich, was mit einem weiter erhöhten Komfort für den Nutzer einhergeht.

Die bestimmte Teilmenge verringert einen Aufwand bei dem rechenintensiven Ermitteln des Übereinstimmungsgrads. Dank der bestimmten Teilmenge braucht das Backend die übertragene Audiodatei nicht mit jeder gespeicherten Audiodatei zu vergleichen, wodurch eine praktisch akzeptable Reaktionszeit des Backends bei dem Identifizieren des Nutzers erreicht wird. Das Backend bestimmt die Teilmenge ausschließlich abhängig von der empfangenen Audiodatei und den gespeicherten Audiodateien. Das Bestimmen der Teilmenge entspricht einem Klassifizieren der gespeicherten Audiodateien in Bezug auf die empfangene Audiodatei.

Bevorzugt bestimmt das Backend die Teilmenge durch ein Ausschließen von gespeicherten Audiodateien. Bei dem Bestimmten der Teilmenge geht das Backend von der Mehrzahl, d.h. der Gesamtzahl, der gespeicherten Audiodateien als der bestimmten Teilmenge aus und schließt das Backend zu der empfangenen Audiodatei komplementäre Audiodateien aus der bestimmten Teilmenge aus. Mittels des Ausschließens wird eine Größe der bestimmten Teilmenge soweit verringert, dass der Übereinstimmungsgrad der empfangenen Audiodatei mit jeder gespeicherten Audiodatei aus der bestimmten Teilmenge innerhalb der praktisch akzeptablen Reaktionszeit ermittelt werden kann. Nach experimentellen Erfahrungen sind Teilmengen aus fünf bis zehn gespeicherten Audiodateien praktikabel.

Weiterhin bevorzugt ermittelt das Backend zu jeder Audiodatei eine Mehrzahl von Metadaten, ordnet das Backend der Audiodatei die ermittelten Metadaten zu und schließt das Backend anhand von zugeordneten Metadaten eine gespeicherte Audiodatei aus der bestimmten Teilmenge aus, wenn das Backend eine Inkompatibilität eines der gespeicherten Audiodatei zugeordneten Metadatums mit einem korrespondierenden der empfangenen Audiodatei zugeordneten Metadatum ermittelt. Das Backend ermittelt die Metadaten abhängig von der Audiodatei. Die Zuordnung aus Audiodatei und Metadaten kann als ein Sprechprofil des Nutzers bezeichnet werden.

Zum Ermitteln der Inkompatibilität vergleicht das Backend das Metadatum der gespeicherten Audiodatei mit dem korrespondierenden Metadatum der empfangenen Audiodatei. Das Vergleichen von Metadaten ist deutlich weniger rechenintensiv als das Vergleichen von Audiodateien. Das Metadatum der empfangenen Audiodatei kann innerhalb der praktisch akzeptablen Rechenzeit mit den jeweils korrespondierenden Metadaten aller gespeicherten Audiodateien verglichen werden.

Vorteilhaft definiert das Backend bei dem Ermitteln der Inkompatibilität eine Reihenfolge der korrespondierenden Metadaten abhängig von einer Größe der zu bestimmenden Teilmenge. Das Backend ermittelt für ein Metadatum der empfangenen Audiodatei die Größe der jeweils verbleibenden Teilmenge, wenn gespeicherte Audiodateien mit zu dem Metadatum der empfangenen Audiodatei inkompatiblen Metadaten ausgeschlossen werden. Auf diese Weise kann das Backend verhindern, dass die bestimmte Teilmenge für eine praktisch akzeptable Antwortzeit zu groß oder für ein erfolgreiches Identifizieren des Nutzers zu klein ist.

Insbesondere kann das Backend die Reihenfolge der korrespondierenden Metadaten mittels einer Rückkoppelung definieren. Wenn nach einem mehrschrittigen Ausschließen von Audiodateien die verbleibende Teilmenge zu klein oder zu groß ist, kann das Backend die erfolgten Ausschließungsschritte rückgängig machen und eine andere Reihenfolge der korrespondierenden Metadaten definieren. Das Definieren der anderen Reihenfolge entspricht einem anderen Gewichten der korrespondierenden Metadaten.

Insbesondere kann das Backend ein Metadatum oder mehrere Metadaten der empfangenen Audiodatei aus dem Ermitteln der Inkompatibilität ausschließen, beispielsweise wenn bereits die praktikable Größe der Teilmenge erreicht ist oder das Metadatum zu einer leeren Teilmenge führt.

Idealerweise leitet das Backend jedes Metadatum von der Audiodatei ab und ordnet das Backend der Audiodatei das jeweils abgeleitete Metadatum zu. Das Backend analysiert eine Form und/oder einen Inhalt der Audiodatei und verwendet an sich bekannte Werkzeuge zum Analysieren.

In einer Ausführungsform leitet das Backend von der Audiodatei ein Audioformat, eine Abtastrate und/oder eine Bitrate als technische Metadaten ab. Das Audioformat, die Abtastrate und die Bitrate sind als Parameter in der Audiodatei enthalten und werden von dem Backend aus der Audiodatei extrahiert. Audiodateien einer guten Qualität haben eine Abtastrate von 44 kHz und eine Bitrate von 96 Kbps. Dagegen spricht eine Abtastrate von 8 kHz (üblich im Telefonnetz) für eine schlechte Qualität der Audiodatei. Das Backend kann nachfolgend beschriebene weitere von den technischen Metadaten verschiedene Metadaten mittels der technischen Metadaten gewichten.

Alternativ oder zusätzlich kann das Backend von der Audiodatei eine Tonhöhe, eine Klangfarbe und/oder eine Lautstärke als stimmliche Metadaten ableiten. Das Backend kann mittels einer Fourieranalyse ein Frequenzspektrum der Audiodatei berechnen und die Tonhöhe und die Klangfarbe aus dem Frequenzspektrum ableiten. Das Backend kann die Lautstärke aus einer Amplitude der Audiodatei berechnen. Tonhöhe und Klangfarbe werden als melodische Parameter der Audiodatei bezeichnet. Die Lautstärke ist als ein dynamischer Parameter der Audiodatei zu verstehen.

Alternativ oder zusätzlich kann das Backend von der Audiodatei eine Sprache, einen Sprechrhythmus, eine Artikulation und/oder eine Sprechmelodie als sprachliche Metadaten ableiten. Das Backend kann die Sprache, beispielsweise Deutsch, Englisch oder Französisch, mittels eines an sich bekannten Algorithmus zur automatischen Spracherkennung (Automatic Speech Recognition, ASR) ermitteln. Der Sprechrhythmus umfasst ein Verhältnis von Sprache zu Pause, eine Anzahl von Wörtern und/oder Silben pro Zeiteinheit. Der Sprechrhythmus wird als ein temporaler Parameter der Audiodatei bezeichnet. Die Artikulation umfasst eine Änderung der Amplitude pro Zeiteinheit und ist ein Maß für eine Lautbindung und Deutlichkeit der Sprache. Die Artikulation wird als ein artikulatorischer Parameter der Audiodatei bezeichnet. Die Sprechmelodie umfasst eine Betonung und wird aus einer Amplitude der Audiodatei berechnet. Die Sprechmelodie gehört zu den dynamischen Parametern der Audiodatei.

In weiteren Ausführungsformen leitet das Backend von der Audiodatei ein Geschlecht und/oder ein Alter des Nutzers als persönliche Metadaten ab. Das Geschlecht und das Alter werden von den stimmlichen Metadaten und sprachlichen Metadaten abgeleitet. Beispielsweise spricht ein alter Mensch leiser und tiefer als ein junger Mensch oder spricht eine Frau heller als ein Mann. Es versteht sich, dass die Zuschreibungen jung/alt bzw. weiblich/männlich lediglich die Spracheingabe klassifizieren, nicht dagegen zwangsläufig ebenso den Nutzer.

Günstigerweise berechnet das Backend für jedes stimmliche, sprachliche und/oder persönliche Metadatum einen Konfidenzwert und ordnet das Backend den berechneten Konfidenzwert dem jeweiligen Metadatum zu. Der Konfidenzwert kann abhängig von den technischen Metadaten berechnet werden. Der Konfidenzwert liegt zwischen 0% und 100% und gibt an, wie wahrscheinlich das jeweilige abgeleitete Metadatum auf die Audiodatei zutrifft. Der Konfidenzwert erhöht die Wahrscheinlichkeit, dass die den Nutzer identifizierende gespeicherte Audiodatei nicht von dem Backend aufgrund einer ermittelten Inkompatibilität ausgeschlossen wird.

In vorteilhaften Ausführungsformen ermittelt das Backend die Inkompatibilität abhängig von den jeweils zugeordneten Konfidenzwerten. Das Backend berücksichtigt bei dem Ermitteln der Inkompatibilität Konfidenzwerte der empfangenen Audiodatei und/oder Konfidenzwerte der gespeicherten Audiodatei. Beispielsweise kann das Backend ein Metadatum der empfangenen Audiodatei oder der gespeicherten Audiodatei beim Ermitteln der Inkompatibilität ignorieren, welches einen niedrigen Konfidenzwert aufweist, d.h. eine geringe Konfidenz aufweist oder unsicher ist.

In einem weiteren Beispiel für die Verwendung der Konfidenzwerte ermittelt das Backend bei einer empfangenen Audiodatei mit einer "männlichen" Spracheingabe und einer Konfidenz über 70% eine Inkompatibilität mit jeder "weiblichen" Spracheingabe einer gespeicherten Audiodatei. Wenn die "männliche" Spracheingabe der empfangenen Audiodatei dagegen eine Konfidenz von 30% aufweist, wird nur für "weibliche" Spracheingaben gespeicherter Audiodateien mit einer Konfidenz von 70% eine Inkompatibilität ermittelt.

Kurz gesagt, je sicherer ein Metadatum der empfangenen Audiodatei ist, desto mehr gespeicherte Audiodateien werden ausgeschlossen. Umgekehrt werden desto weniger gespeicherte Audiodateien ausgeschlossen, je unsicherer ein Metadatum der empfangenen Audiodatei ist.

Wenn das Backend die Reihenfolge der korrespondierenden Metadaten mittels einer Rückkoppelung definiert, kann das Backend erfolgte Ausschließungsschritte rückgängig machen und die rückgängig gemachten Ausschließungsschritte mit angepassten Schwellwerten für die Konfidenzwerte wiederholen. Ein Schwellwert wird erhöht, wenn die verbleibende Teilmenge zu groß ist, und erniedrigt, wenn die verbleibende Teilmenge zu klein ist. Selbstverständlich kann das Backend beim Wiederholen der Ausschließungsschritte eine abweichende Reihenfolge der korrespondierenden Metadaten definieren und/oder die Schwellwerte für die Konfidenzwerte anpassen.

Auf diese Weise wird die Wahrscheinlichkeit erhöht, dass die zu der empfangenen Audiodatei passende gespeicherte Audiodatei zu der bestimmten Teilmenge gehört und der Nutzer mittels der empfangenen Audiodatei identifiziert werden kann.

Das Backend kann die Akzeptanzschwelle abhängig von einer definierten Sicherheitsstufe bestimmen. Beispielsweise kann für eine geschäftliche Transaktionsanwendung eine Akzeptanzschwelle von über 90% erforderlich sein, während für eine private Spielanwendung eine Akzeptanzschwelle von 50%-60% ausreichend sein kann.

In vielen Ausführungsformen speichert das Backend eine erste von dem Endgerät des Nutzers empfangene Audiodatei. Die zu der Spracheingabe des Nutzers korrespondierende erste Audiodatei wird im Rahmen der Registrierung des Nutzers gespeichert. Sie muss in der bestimmten Teilmenge enthalten sein, um den Nutzer zu identifizieren.

Ein weiterer Gegenstand der Erfindung ist ein verteilte Anwendung zum Identifizieren eines Nutzers, mit einem von einem Endgerät ausführbaren Frontend und einem von einem Server ausführbaren Backend. Verteilte Anwendungen zum Identifizieren von Nutzern sind weit verbreitet. Infolgedessen ist die erfindungsgemäße verteilte Anwendung vielfach anwendbar.

Erfindungsgemäß ist die verteilte Anwendung konfiguriert, ein erfindungsgemäßes Verfahren auszuführen. Die verteilte Anwendung bietet einem Nutzer einen großen Komfort beim Identifizieren und Authentifizieren.

Noch ein Gegenstand der Erfindung ist ein Computerprogrammprodukt, umfassend ein von einem Rechner lesbares Speichermedium und einen von dem Speichermedium gespeicherten Programmcode. Der Rechner kann das Programm unmittelbar aus dem Speichermedium und oder nach einem Installieren des Programms in einem Arbeitsspeicher des Rechners aus dem Arbeitsspeicher lesen. Entsprechend kann das Speichermedium als ein externer Datenträger wie ein CD-ROM oder ein USB-Stick oder als ein interner Datenspeicher wie eine Festplatte des Rechners oder ein Arbeitsspeicher des Rechners oder als ein Cloudspeicher ausgebildet sein.

Erfindungsgemäß veranlasst der Programmcode den Rechner, als ein Endgerät ein Frontend oder als ein Server ein Backend einer erfindungsgemäßen verteilten Anwendung zum Identifizieren eines Nutzers auszuführen, wenn er von einem Prozessor des Rechners gelesen und ausgeführt wird. Das Computerprogrammprodukt implementiert eine verteilte Anwendung zum Identifizieren eines Nutzers, welche dem Nutzer einen großen Komfort bietet.

Ein wesentlicher Vorteil des erfindungsgemäßen Verfahrens besteht darin, dass der Nutzer ein Identifizieren und Authentifizieren durch eine verteilte Anwendung als sehr komfortabel wahrnimmt. Ein weiterer Vorteil besteht darin, dass die verteilte Anwendung universell einsetzbar und an verschiedene Sicherheitsanforderungen anpassbar ist.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Blockdiagramm eine verteilte Anwendung nach einer Ausführungsform der Erfindung zum Identifizieren eines Nutzers, beim Ausführen eines Verfahrens nach einer ersten Ausführungsform der Erfindung;
- Fig. 2: in einem Blockdiagramm die in Fig. 1 gezeigte verteilte Anwendung, beim Ausführen eines Verfahrens nach einer zweiten Ausführungsform der Erfindung.

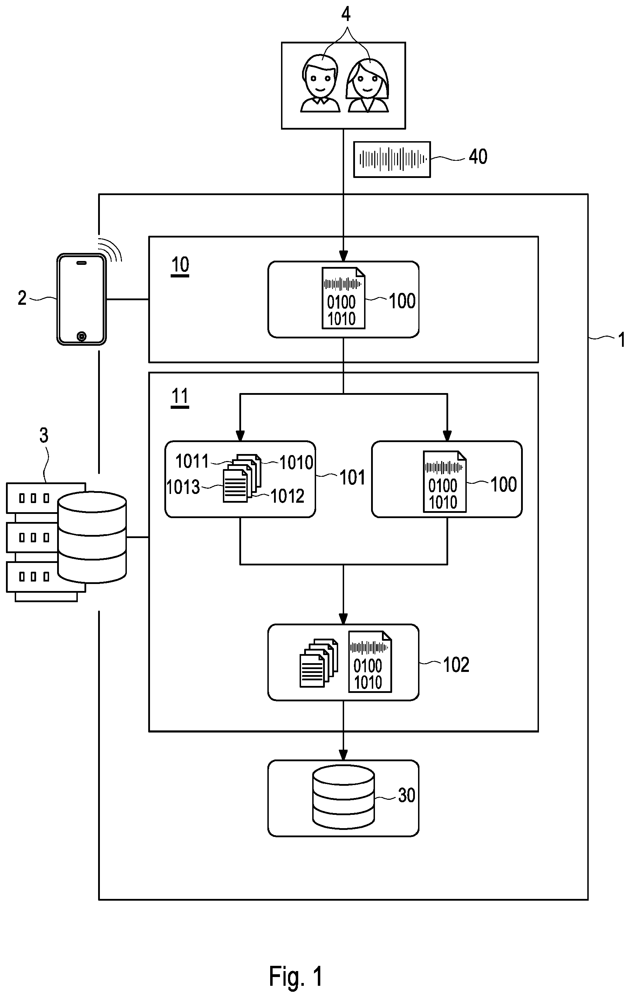

Fig. 1 zeigt in einem Blockdiagramm eine verteilte Anwendung 1 nach einer Ausführungsform der Erfindung zum Identifizieren eines Nutzers 4, beim Ausführen eines Verfahrens nach einer ersten Ausführungsform der Erfindung. Die verteilte Anwendung 1 zum Identifizieren des Nutzers 4 umfasst ein von einem Endgerät 2 ausführbares Frontend 10 und ein von Server 3 ausführbares Backend 11 und ist konfiguriert, ein nachfolgend beschriebenes Verfahren auszuführen.

Die verteilte Anwendung 1 kann mittels eines Computerprogrammprodukts implementiert werden. Das Computerprogrammprodukt umfasst ein von einem Rechner lesbares Speichermedium und einen von dem Speichermedium gespeicherten Programmcode, welcher den Rechner veranlasst, als das Endgerät 2 das Frontend 10 oder als der Server 3 das Backend 11 der verteilten Anwendung 1 zum Identifizieren eines Nutzers 4 bereitzustellen, wenn er von einem Prozessor des Rechners ausgeführt wird.

Bei dem Verfahren zum Identifizieren eines Nutzers 4 erfasst das von dem Endgerät 2 ausgeführte Frontend 10 der verteilten Anwendung 1 eine Eingabe 40 des Nutzers 4 des Endgeräts 2 und identifiziert das von dem Server 3 ausgeführte Backend 11 der verteilten Anwendung 1 den Nutzer 4 anhand der erfassten Eingabe 40.

Das Frontend 10 erfasst eine Spracheingabe des Nutzers 4 als die Eingabe 40 auditiv, erzeugt eine zu der erfassten Spracheingabe korrespondierende Audiodatei 100 und überträgt die erzeugte Audiodatei 100 zu dem Backend 11 der verteilten Anwendung 1.

Das Backend 11 empfängt die übertragene Audiodatei 100 und bestimmt anhand der empfangenen Audiodatei 100 aus einer Mehrzahl von gespeicherten Audiodateien 110 eine Teilmenge 112 von Audiodateien 110. Das Backend 11 bestimmt die Teilmenge 112 insbesondere durch ein Ausschließen von gespeicherten Audiodateien 110.

Dazu kann das Backend 11 zu jeder Audiodatei 100, 110 eine Mehrzahl von Metadaten 101, 111 ermitteln, der Audiodatei 100, 110 die ermittelten Metadaten 101, 111 zuordnen und eine gespeicherte Audiodatei 110 anhand von zugeordneten Metadaten 111 aus der bestimmten Teilmenge 112 ausschließen, wenn das Backend 11 eine Inkompatibilität eines der gespeicherten Audiodatei 110 zugeordneten Metadatums 111 mit einem korrespondierenden der empfangenen Audiodatei 100 zugeordneten Metadatum 101 ermittelt. Die gespeicherte Audiodatei 110 kann in einer Registrierungsdatenbank 30 des Servers 3 gespeichert sein.

Das Backend 11 leitet bevorzugt jedes Metadatum 100, 110 von der Audiodatei 100, 110 ab und ordnet der Audiodatei 100, 110 das jeweils abgeleitete Metadatum 101, 111 zu.

Im Einzelnen kann das Backend 11 von der Audiodatei 100, 110 ein Audioformat, eine Abtastrate und/oder eine Bitrate als technische Metadaten 1010, 1110 ableiten. Das Backend 11 leitet vorteilhaft von der Audiodatei 100, 110 eine Tonhöhe, eine Klangfarbe und/oder eine Lautstärke als stimmliche Metadaten 1011, 1111 ab. Ferner kann das Backend 11 von der Audiodatei 100, 110 eine Sprache, einen Sprechrhythmus, eine Artikulation und/oder eine Sprechmelodie als sprachliche Metadaten 1012, 1112 ableiten.

Idealerweise leitet das Backend 11 von der Audiodatei 100, 110 ein Geschlecht und/oder ein Alter des Nutzers 4 als persönliche Metadaten 1013, 1113 ab.

Das Backend 11 kann ferner für jedes stimmliche, sprachliche und/oder persönliche Metadatum 1011, 1012, 1013, 1111, 1112, 1113 einen Konfidenzwert berechnen und den berechneten Konfidenzwert dem jeweiligen Metadatum 1011, 1012, 1013, 1111, 1112, 1113 zuordnen. Bevorzugt ermittelt das Backend 11 die Inkompatibilität abhängig von den jeweils zugeordneten Konfidenzwerten.

Das Backend 11 definiert geschickter Weise bei dem Ermitteln der Inkompatibilität eine Reihenfolge der korrespondierenden Metadaten 100, 110 abhängig von einer Größe der zu bestimmenden Teilmenge 112.

Das Backend 11 identifiziert den Nutzer 4 anhand der empfangenen Audiodatei 100, wenn ein Übereinstimmungsgrad 113 der empfangenen Audiodatei 100 mit einer Audiodatei 110 aus der bestimmten Teilmenge 112 gleich einer oder größer als eine bestimmte Akzeptanzschwelle ist. Das Backend 11 bestimmt die Akzeptanzschwelle idealerweise abhängig von einer definierten Sicherheitsstufe.

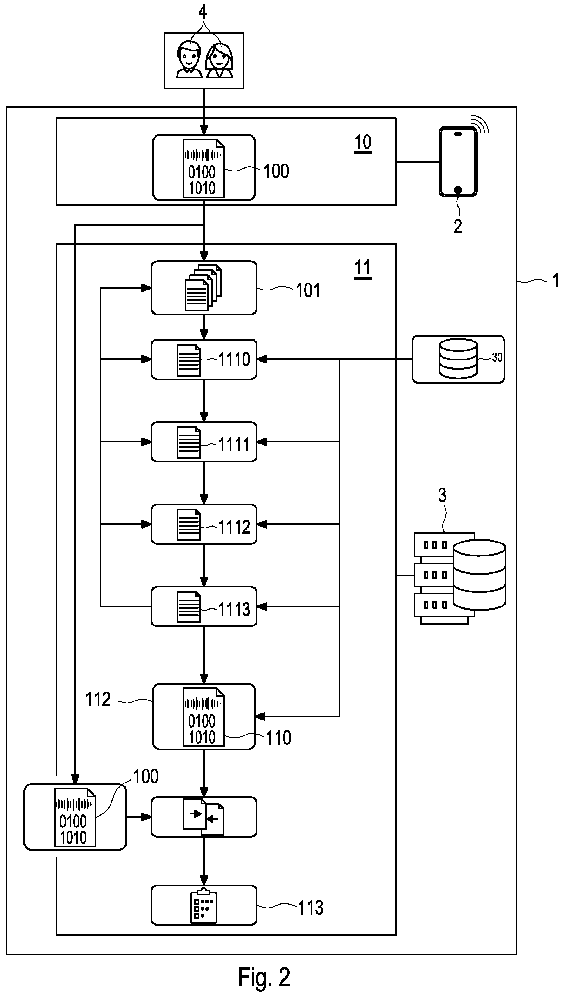

Fig. 2 zeigt in einem Blockdiagramm die in Fig. 1 gezeigte verteilte Anwendung 1, beim Ausführen eines Verfahrens nach einer zweiten Ausführungsform der Erfindung.

Das von dem Endgerät 2 ausgeführte Frontend 10 der verteilten Anwendung 1 erfasst eine Eingabe 40 des Nutzers 4 des Endgeräts 2. Das Frontend 10 erfasst eine Spracheingabe des Nutzers 4 als die Eingabe 40 auditiv, erzeugt eine zu der erfassten Spracheingabe korrespondierende Audiodatei 100 und überträgt die erzeugte Audiodatei 100 zu dem Backend 11 der verteilten Anwendung 1.

Das Backend 11 kann zu der Audiodatei 100 eine Mehrzahl von Metadaten 101 ermitteln und der Audiodatei 100 die ermittelten Metadaten 101 zuordnen.

Das Backend 11 leitet bevorzugt jedes Metadatum 101 von der Audiodatei 100 ab und ordnet der Audiodatei 100 das jeweils abgeleitete Metadatum 101 zu. Die Zuordnung aus der Audiodatei 100 und den Metadaten 101 kann als ein Sprechprofil 102 des Nutzers 4 bezeichnet werden.

Im Einzelnen kann das Backend 11 von der Audiodatei 100 ein Audioformat, eine Abtastrate und/oder eine Bitrate als technische Metadaten 1010 ableiten. Das Backend 11 leitet vorteilhaft von der Audiodatei 100 eine Tonhöhe, eine Klangfarbe und/oder eine Lautstärke als stimmliche Metadaten 1011 ab. Ferner kann das Backend 11 von der Audiodatei 100 eine Sprache, einen Sprechrhythmus, eine Artikulation und/oder eine Sprechmelodie als sprachliche Metadaten 1012 ableiten.

Idealerweise leitet das Backend 11 von der Audiodatei 100 ein Geschlecht und/oder ein Alter des Nutzers 4 als persönliche Metadaten 1013 ab.

Das Backend 11 kann ferner für jedes stimmliche, sprachliche und/oder persönliche Metadatum 1011, 1012, 1013 einen Konfidenzwert berechnen und den berechneten Konfidenzwert dem jeweiligen Metadatum 1011, 1012, 1013 zuordnen.

Zum Registrieren des Nutzers 4 speichert das Backend 11 bevorzugt die von dem Endgerät 2 des Nutzers 4 empfangene Audiodatei 100 insbesondere mit den zugeordneten Metadaten 101 und/oder in einer Registrierungsdatenbank 30 des Servers 3, wenn es die Audiodatei 100 als eine erste Audiodatei 100 des Nutzers 4 empfängt.

### Bezugszeichenliste

- 1: verteilte Anwendung
- 10: Frontend
- 100: Audiodatei
- 101: Metadaten
- 1010: technische Metadaten
- 1011: stimmliche Metadaten
- 1012: sprachliche Metadaten
- 1013: persönliche Metadaten
- 102: Sprechprofil
- 11: Backend
- 110: Audiodatei
- 111: Metadaten
- 1110: technische Metadaten
- 1111: stimmliche Metadaten
- 1112: sprachliche Metadaten
- 1113: persönliche Metadaten
- 112: Teilmenge
- 113: Übereinstimmungsgrad
- 2: Endgerät
- 3: Server
- 30: Registrierungsdatenbank
- 4: Nutzer
- 40: Eingabe

## Patentansprüche

1. Verfahren zum Identifizieren eines Nutzers (4), bei dem
- ein von einem Endgerät (2) ausgeführtes Frontend (10) einer verteilten Anwendung (1) eine Eingabe eines Nutzers (4) des Endgeräts (2) erfasst und ein von einem Server (3) ausgeführtes Backend (11) der verteilten Anwendung (1) den Nutzer (4) anhand der erfassten Eingabe identifiziert;
- das Frontend (10) eine Spracheingabe des Nutzers (4) als die Eingabe auditiv erfasst, eine zu der erfassten Spracheingabe korrespondierende Audiodatei (100) erzeugt und die erzeugte Audiodatei (100) zu dem Backend (11) der verteilten Anwendung (1) überträgt;
- das Backend (11) die übertragene Audiodatei (100) empfängt, anhand der empfangenen Audiodatei (100) aus einer Mehrzahl von gespeicherten Audiodateien (110) eine Teilmenge (112) von Audiodateien (110) bestimmt;
- das Backend (11) den Nutzer (4) anhand der empfangenen Audiodatei (100) identifiziert, wenn ein Übereinstimmungsgrad (113) der empfangenen Audiodatei (100) mit einer Audiodatei (110) aus der bestimmten Teilmenge (112) gleich einer oder größer als eine bestimmte Akzeptanzschwelle ist.

2. Verfahren nach Anspruch 1, bei dem das Backend (11) die Teilmenge (112) durch ein Ausschließen von gespeicherten Audiodateien (110) bestimmt.

3. Verfahren nach Anspruch 2, bei dem das Backend (11) zu jeder Audiodatei (100, 110) eine Mehrzahl von Metadaten (101, 111) ermittelt, der Audiodatei (100, 110) die ermittelten Metadaten (101, 111) zuordnet und eine gespeicherte Audiodatei (110) anhand von zugeordneten Metadaten (111) aus der bestimmten Teilmenge (112) ausschließt, wenn das Backend (11) eine Inkompatibilität eines der gespeicherten Audiodatei (110) zugeordneten Metadatums (111) mit einem korrespondierenden der empfangenen Audiodatei (100) zugeordneten Metadatum (101) ermittelt.

4. Verfahren nach Anspruch 3, bei dem das Backend (11) bei dem Ermitteln der Inkompatibilität eine Reihenfolge der korrespondierenden Metadaten (101, 111) abhängig von einer Größe der zu bestimmenden Teilmenge (112) definiert.

5. Verfahren nach Anspruch 3 oder 4, bei dem das Backend (11) jedes Metadatum (100, 110) von der Audiodatei (100, 110) ableitet und der Audiodatei (100, 110) das jeweils abgeleitete Metadatum (101, 111) zuordnet.

6. Verfahren nach Anspruch 5, bei dem das Backend (11) von der Audiodatei (100, 110) ein Audioformat, eine Abtastrate und/oder eine Bitrate als technische Metadaten (1010, 1110) ableitet.

7. Verfahren nach Anspruch 5 oder 6, bei dem das Backend (11) von der Audiodatei (100, 110) eine Tonhöhe, eine Klangfarbe und/oder eine Lautstärke als stimmliche Metadaten (1011, 1111) ableitet.

8. Verfahren nach einem der Ansprüche 5 bis 7, bei dem das Backend (11) von der Audiodatei (100, 110) eine Sprache, einen Sprechrhythmus, eine Artikulation und/oder eine Sprechmelodie als sprachliche Metadaten (1012, 1112) ableitet.

9. Verfahren nach Anspruch 7 oder 8, bei dem das Backend (11) von der Audiodatei (100, 110) ein Geschlecht und/oder ein Alter des Nutzers (4) als persönliche Metadaten (1013, 1113) ableitet.

10. Verfahren nach einem der Ansprüche 7 bis 9, bei dem das Backend (11) für jedes stimmliche, sprachliche und/oder persönliche Metadatum (1011, 1012, 1013, 1111, 1112, 1113) einen Konfidenzwert berechnet und den berechneten Konfidenzwert dem jeweiligen Metadatum (1011, 1012, 1013, 1111, 1112, 1113) zuordnet.

11. Verfahren nach Anspruch 10, bei dem das Backend (11) die Inkompatibilität abhängig von den jeweils zugeordneten Konfidenzwerten ermittelt.

12. Verfahren nach einem der Ansprüche 1 bis 11, bei dem das Backend (11) die Akzeptanzschwelle abhängig von einer definierten Sicherheitsstufe bestimmt.

13. Verfahren nach einem der Ansprüche 1 bis 12, bei dem das Backend (11) eine erste von dem Endgerät (2) des Nutzers (4) empfangene Audiodatei (100) speichert.

14. Verteilte Anwendung (1) zum Identifizieren eines Nutzers (4), mit einem von einem Endgerät (2) ausführbaren Frontend (10) und einem von einem Server (3) ausführbaren Backend (11), welche konfiguriert ist, ein Verfahren nach einem der Ansprüche 1 bis 13 auszuführen.

15. Computerprogrammprodukt, umfassend ein von einem Rechner lesbares Speichermedium und einen von dem Speichermedium gespeicherten Programmcode, welcher den Rechner veranlasst, als ein Endgerät (2) ein Frontend (10) oder als ein Server (3) ein Backend (11) einer verteilten Anwendung (1) nach Anspruch 14 zum Identifizieren eines Nutzers (4) bereitzustellen, wenn er von einem Prozessor des Rechners ausgeführt wird.

## Claims

1. A method for identifying a user (4), wherein
- a frontend (10) of a distributed application (1), which frontend (10) is executed by a terminal (2), acquires an input from a user (4) of the terminal (2), and a backend (11) of the distributed application (1), which backend (11) is executed by a server (3), identifies the user (4) based the acquired input;
- the frontend (10) auditively acquires a voice input from the user (4) as the input, generates an audio file (100) corresponding to the acquired voice input, and transmits the generated audio file (100) to the backend (11) of the distributed application (1);
- the backend (11) receives the transmitted audio file (100), determines a subset (112) of audio files (110) from a plurality of stored audio files (110) based on the received audio file (100);
- the backend (11) identifies the user (4) on the basis of the received audio file (100) if a match level (113) of the received audio file (100) with an audio file (110) from the determined subset (112) is equal to or greater than a calculated acceptance threshold.

2. The method according to claim 1, wherein the backend (11) determines the subset (112) by excluding stored audio files (110).

3. The method according to claim 2, wherein the backend (11) calculates a plurality of metadata (101, 111) for each audio file (100, 110), assigns the calculated metadata (101, 111) to the audio file (100, 110), and excludes a stored audio file (110) from the calculated subset (112) on the basis of the assigned metadata (111) if the backend (11) calculates an incompatibility between a metadatum (111) assigned to the stored audio file (110) and a corresponding metadatum (101) assigned to the received audio file (100).

4. The method according to claim 3, wherein the backend (11), when calculating the incompatibility, defines an order of the corresponding metadata (101, 111) depending on the size of the subset (112) to be calculated.

5. The method according to claim 3 or 4, wherein the backend (11) derives each metadatum (100, 110) from the audio file (100, 110) and assigns the respectively derived metadatum (101, 111) to the audio file (100, 110).

6. The method according to claim 5, wherein the backend (11) derives an audio format, a sample rate, and/or a bit rate from the audio file (100, 110) as technical metadata (1010, 1110).

7. The method according to claim 5 or 6, wherein the backend (11) derives a pitch, a timbre, and/or a volume from the audio file (100, 110) as vocal metadata (1011, 1111).

8. The method according to any of claims 5 to 7, wherein the backend (11) derives a language, a speech rhythm, an articulation and/or a speech melody from the audio file (100, 110) as speech metadata (1012, 1112).

9. The method according to claim 7 or 8, wherein the backend (11) derives a gender and/or an age of the user (4) from the audio file (100, 110) as personal metadata (1013, 1113).

10. The method according to any of claims 7 to 9, wherein the backend (11) calculates a confidence value for each vocal, speech and/or personal metadatum (1011, 1012, 1013, 1111, 1112, 1113) and assigns the calculated confidence value to the respective metadatum (1011, 1012, 1013, 1111, 1112, 1113).

11. The method according to claim 10, wherein the backend (11) calculates the incompatibility depending on the respectively assigned confidence values.

12. The method according to any of claims 1 to 11, wherein the backend (11) calculates the acceptance threshold depending on a defined security level.

13. The method according to any of claims 1 to 12, wherein the backend (11) stores a first audio file (100) received from the terminal (2) of the user (4).

14. A distributed application (1) for identifying a user (4), having a frontend (10) executable by a terminal (2) and a backend (11) executable by a server (3), which application is configured to execute a method according to any of claims 1 to 13.

15. A computer program product comprising a storage medium readable by a computer and a program code stored by the storage medium, which program code causes the computer to provide, as a terminal (2), a frontend (10) or, as a server (3), a backend (11) of a distributed application (1) according to claim 14 for identifying a user (4) when being executed by a processor of the computer.

## Revendications

1. Procédé d'identification d'un utilisateur (4), dans lequel
- un front-end (10) d'une application distribuée (1), exécuté par un terminal (2), capte une entrée effectuée par un utilisateur (4) du terminal (2), et un back-end (11) de l'application distribuée (1), exécuté par un serveur (3), identifie l'utilisateur (4) à partir de l'entrée captée ;
- le front-end (10) capte auditivement une entrée vocale de l'utilisateur (4), génère un fichier audio (100) correspondant à l'entrée vocale captée et transmet le fichier audio (100) généré au back-end (11) de l'application distribuée (1) ;
- le back-end (11) reçoit le fichier audio (100) transmis et, à partir du fichier audio (100) reçu, détermine un sous-ensemble (112) de fichiers audio (110) parmi une pluralité de fichiers audio (110) enregistrés ;
- le back-end (11) identifie l'utilisateur (4) à partir du fichier audio (100) reçu lorsque le degré de concordance (113) entre le fichier audio (100) reçu et un fichier audio (110) issu du sous-ensemble (112) déterminé est égal ou supérieur à un seuil d'acceptation donné.

2. Procédé selon la revendication 1, dans lequel le back-end (11) détermine le sous-ensemble (112) en excluant des fichiers audio (110) enregistrés.

3. Procédé selon la revendication 2, dans lequel le back-end (11) détermine, pour chaque fichier audio (100, 110), une pluralité de métadonnées (101, 111), attribue les métadonnées (101, 111) déterminées au fichier audio (100, 110) et exclut un fichier audio (110) enregistré de l'ensemble déterminé sur la base des métadonnées (111) (112) attribuées si le back-end (11) détecte une incompatibilité entre une métadonnée (111) attribuée à l'un des fichiers audio (110) enregistrés et une métadonnée (101) correspondante attribuée au fichier audio (100) reçu.

4. Procédé selon la revendication 3, dans lequel, lors de la détection de l'incompatibilité, le back-end (11) définit un ordre des métadonnées (101, 111) correspondantes en fonction de la taille du sous-ensemble (112) à déterminer.

5. Procédé selon la revendication 3 ou 4, dans lequel le back-end (11) déduit chaque métadonnée (100, 110) du fichier audio (100, 110) et attribue au fichier audio (100, 110) la respective métadonnée (101, 111) ainsi déduite.

6. Procédé selon la revendication 5, dans lequel le back-end (11) déduit du fichier audio (100, 110) un format audio, une fréquence d'échantillonnage et/ou un débit binaire sous la forme de métadonnées techniques (1010, 1110).

7. Procédé selon la revendication 5 ou 6, dans lequel le back-end (11) déduit du fichier audio (100, 110) une fréquence, un timbre et/ou un volume sonore sous la forme de métadonnées vocales (1011, 1111).

8. Procédé selon l'une des revendications 5 à 7, dans lequel le back-end (11) déduit du fichier audio (100, 110) une langue, un rythme de la parole, une prononciation et/ou une intonation sous la forme de métadonnées linguistiques (1012, 1112).

9. Procédé selon la revendication 7 ou 8, dans lequel le back-end (11) déduit du fichier audio (100, 110) le sexe et/ou l'âge de l'utilisateur (4) sous la forme de métadonnées personnelles (1013, 1113).

10. Procédé selon l'une des revendications 7 à 9, dans lequel le back-end (11) calcule une valeur de confiance pour chaque métadonnée vocale, linguistique et/ou personnelle (1011, 1012, 1013, 1111, 1112, 1113) et attribue la valeur de confiance calculée à la métadonnée (1011, 1012, 1013, 1111, 1112, 1113) correspondante.

11. Procédé selon la revendication 10, dans lequel le back-end (11) détermine l'incompatibilité en fonction des valeurs de confiance attribuées.

12. Procédé selon l'une des revendications 1 à 11, dans lequel le back-end (11) détermine le seuil d'acceptation en fonction d'un niveau de sécurité défini.

13. Procédé selon l'une des revendications 1 à 12, dans lequel le back-end (11) enregistre un premier fichier audio (100) reçu du terminal (2) de l'utilisateur (4).

14. Application distribuée (1) destinée à identifier un utilisateur (4), dotée d'un front-end (10) exécutable à partir d'un terminal (2) et d'un back-end (11) exécutable à partir d'un serveur (3), qui est configurée pour exécuter un procédé selon l'une des revendications 1 à 13.

15. Produit logiciel comprenant un support de stockage lisible par un ordinateur et un code de programme stocké sur ledit support de stockage, lequel code amenant l'ordinateur à fonctionner, en tant que terminal (2), comme un front-end (10), ou, en tant que serveur (3), comme un back-end (11) d'une application distribuée (1) selon la revendication 14, afin d'identifier un utilisateur (4), lorsqu'il est exécuté par un processeur de l'ordinateur.
